# EUROPEAN PATENT APPLICATION

(11) **EP 1 956 731 A2**
(43) Date of publication of application: **13.08.2008**
(21) Application number: 08002384.9
(22) Date of filing: 08.02.2008
(51) Int. Cl.: H04B 7/04

(54) **Method and related apparatus for stopping multi-input multi-output operation in a wireless communications system**

(30) Priority: 08.02.2007 US 888770 P
(71) Applicant: Innovative Sonic Limited, Tortola (VG)
(72) Inventor: Kuo, Richard Lee-Chee, Peitou, Taipei City (TW)
(74) Representative: Weber, Joachim

(57) **Abstract**

Stopping a multi-input multi-output, called MIMO, operation for a user equipment, known as UE, of a wireless communications system to ensure that the UE can receive downlink data after the MIMO operation is stopped includes indicating lower layers of the UE to stop the MIMO operation when an ACTIVE SET UPDATE message, a CELL UPDATE CONFIRM message, or a reconfiguration message not including a MIMO parameter information element, called IE, is received from a network terminal (302).

## Description

This application claims the benefit of U.S. Provisional Application No. 60/888,770 filed on FEB. 08, 2007 and entitled "Method And Apparatus for Stopping MIMO Procedures in a Wireless Communication System", the contents of which are incorporated herein by reference.

The present invention relates to a method and apparatus for stopping a MIMO operation for a wireless communications system according to the pre-characterizing clauses of claims 1 and 4.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting the third generation mobile telecommunication technology, the 3rd Generation Partnership Project (3GPP) provides High Speed Package Access (HSPA) technology, which includes High Speed Downlink Package Access (HSDPA) and High Speed Uplink Package Access (HSUPA), to increase bandwidth utility rate and package data processing efficiency so as to improve uplink/downlink transmission rates.

To further increase the downlink data rate, 3GPP introduces a Multi-input Multi-output (MIMO) technology, with which a user equipment (UE) and a base station, known as a Node-B, utilize multiple antennas to transmit/receive radio signals. The MIMO technology can be further integrated with spatial multiplexing, beam forming and spatial diversity technologies to reduce signal interference and increase channel capacity. In the prior art, the MIMO operation is mainly employed in the HSDPA system, doubling the peak rate of a high-speed downlink share channel (HS-DSCH). Concerning radio resource control (RRC) states of the UE, the MIMO operation is only applicable for the UE in a CELL_DCH state.

To control the MIMO operation of the UE, a universal terrestrial radio access network (UTRAN) can set configuration of MIMO operation in RRC messages with information elements (IEs) and send the RRC messages to the UE through corresponding RRC procedures. According to an RRC protocol specification of 3GPP, a MIMO parameter IE includes a MIMO operation IE, a MIMO N/M Ratio IE and a MIMO Pilot Configuration IE. The MIMO N/M Ratio IE includes information about antenna numbers of the UE and the Node-B. The MIMO Pilot Configuration IE includes information about diversity, channelization code, etc. The MIMO operation IE is utilized to indicate the UE to activate, continue or stop the MIMO operation, and correspondingly includes three parameter values, which represent "start", "continue" and "stop", respectively.

The UTRAN can use an ACTIVE SET UPDATE message, a CELL UPDATE CONFIRM message, or any reconfiguration message to include the MIMO parameter IE and send the messages to the UE. On the other hand, the UE contains a MIMO_STATUS variable in an RRC layer to store the MIMO configuration data included in the received MIMO parameter IE, i.e. parameter values corresponding to MIMO N/M ratio and MIMO pilot configuration.

In the prior art, the UTRAN has two ways to stop the MIMO operation of the UE. The first way is setting the MIMO operation IE to "stop" and then including the MIMO parameter IE in the abovementioned RRC messages. After receiving the RRC message, the UE clears the MIMO_STATUS variable in the RRC layer and triggers the lower layers, such as a media access control (MAC) layer and a physical layer, to stop operation corresponding to MIMO. The second way is not including the MIMO parameter IE in the abovementioned RRC messages most recently sent to the UE. In this situation, if the received RRC message includes no MIMO parameter IE, the UE only has to clear the MIMO_STATUS variable in the RRC layer. After the procedure of stopping the MIMO operation is accomplished, irrespective of whether the procedure is stopped through the first or second way, the UE switches to use a non-MIMO configuration for HS-DSCH reception.

As can be seen from the above, if the UTRAN uses the second way, the UE only clears the MIMO_STATUS variable in the RRC layer, but does not trigger the lower layers to stop related MIMO operation. In this situation, the lower layers still use the MIMO configuration (i.e. channelization code) to receive data, however the UTRAN has adopted the non-MIMO configuration for transmitting data to the UE. Therefore, the UE will incorrectly decode the HS-DSCH data if the UTRAN uses the second way to stop the MIMO operation of the UE.

This in mind, the present invention aims at providing a method and apparatus for stopping a MIMO operation for a UE of a wireless communications system and related communications device that can ensure that the UE can receive downlink data after the MIMO operation is stopped.

This is achieved by a method and apparatus for stopping a MIMO operation for a UE of a wireless communications system according to the pre-characterizing clauses of claims 1 and 4. The dependent claims pertain to corresponding further developments and improvements.

As will be seen more clearly from the detailed description following below, the claimed method for indicating lower layers of the UE to stop the MIMO operation when an ACTIVE SET UPDATE message, a CELL UPDATE CONFIRM message, or a reconfiguration message not including a MIMO parameter information element (IE) is received from a network terminal.

In the following, the invention is further illustrated by way of example, taking reference to the accompanying drawings. Thereof
Fig. 1 is a functional block diagram of a communications device.
Fig. 2 is a diagram of the program code shown in Fig. 1.
Fig. 3 is a flowchart diagram of a process according to an embodiment of the present invention.

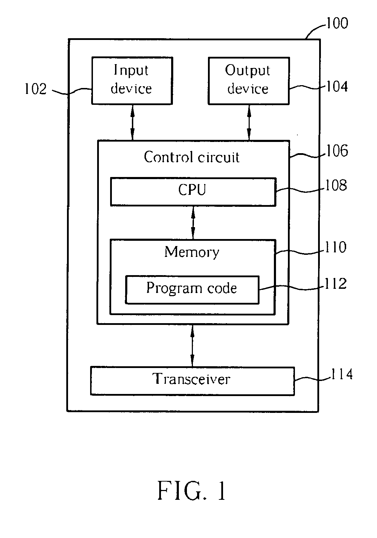

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a High Speed Package Access (HSPA) system of the third generation (3G) mobile communications system, supporting a MIMO operation.

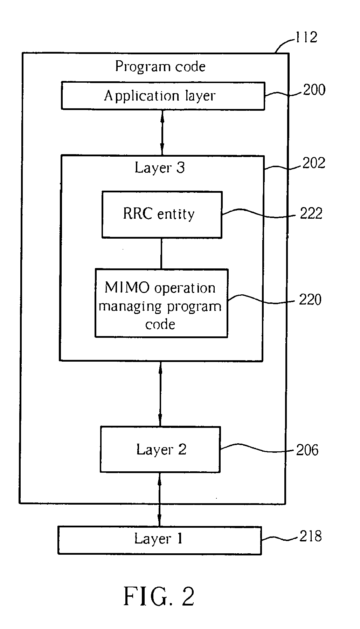

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 includes a radio resource control (RRC) entity 222, which is used for receiving or generating RRC messages and information elements (IEs) to control the Layer 1 218 and the Layer 2 206 or to exchange the RRC configuration with other communications devices, such as a base station (Node-B) or a UTRAN. The Layer 1 218 and the Layer 2 206 are preferably a media access control (MAC) layer and a physical (PHY) layer, respectively.

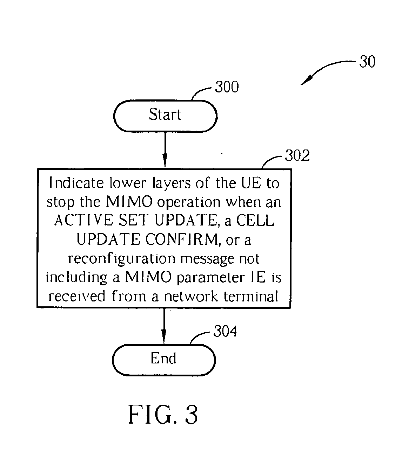

Preferably, the communications device 100 includes a MIMO_STATUS variable in an RRC layer for storing MIMO configuration data stored in received RRC messages. To activate the MIMO operation of the communications device 100, the UTRAN sets a MIMO parameter IE to "stop", and then includes this IE in an ACTIVE SET UPDATE, a CELL UPDATE CONFIRM, or a reconfiguration message to send to the UE. The communications device 100 stores the received MIMO configuration data in the MIMO_STATUS variable in the RRC layer and indicates the Layer 1218 and the Layer 2 206 to start operation related to MIMO. In this situation, the embodiment of the present invention provides a MIMO operation managing program code 220 to stop the MIMO operation of the communications device 100 accurately in order to ensure that the communications device 100 can receive downlink data in a non-MIMO mode. Please refer to Fig. 3, which illustrates a schematic diagram of a process 30 according to an embodiment of the present invention. The process 30 is utilized for stopping a MIMO operation for a UE of a wireless communications system, and can be compiled into the MIMO operation managing program code 220. The process 30 includes the following steps:
Step 300: Start.
Step 302: Indicate lower layers of the UE to stop the MIMO operation when an ACTIVE SET UPDATE, a CELL UPDATE CONFIRM, or a reconfiguration message not including a MIMO parameter IE is received from a network terminal.
Step 304: End.

According to the process 30, if the UE receives any of the abovementioned RRC messages during the MIMO operation and no MIMO parameter IE is included in the received RRC message, the UE indicates the lower layers to stop the MIMO operation. The lower layers preferably include the MAC layer and the PHY layer. In addition, the UE also clears a MIMO variable in the RRC layer if the MIMO variable is set. After the process 30 is accomplished, the lower layers can receive the downlink data (the HS-DSCH data) according to a correct configuration (i.e. channelization code).

In conclusion, the embodiment of the present invention requires the UE to clear the MIMO configuration data associated with the RRC layer and further to stop the MIMO operation of the MAC and PHY layers. Thus, the embodiment of the present invention ensures that the UE can receive data with the correct configuration after switching from the MIMO mode to the non-MIMO mode.

## Claims

1. A method for stopping a multi-input multi-output, hereinafter called MIMO, operation for a user equipment, hereinafter called UE, of a wireless communications system, the method comprising:
**characterized by** indicating lower layers of the UE to stop the MIMO operation when an ACTIVE SET UPDATE message, a CELL UPDATE CONFIRM message, or a reconfiguration message not including a MIMO parameter information element, hereinafter called IE, is received from a network terminal (302).

2. The method of claim 1, **characterized in that** the lower layers of the UE comprise a media access control layer and a physical layer.

3. The method of claim 1, **characterized by the UE** further comprising clearing a MIMO_STATUS variable in a radio resource control, hereinafter called RRC, layer for storing configuration data corresponding to the MIMO operation.

4. A communications device (100) used in a communications system for stopping a multi-input multi-output, hereinafter called MIMO, operation to ensure that the communications device can receive downlink data after the MIMO operation is stopped, the communications device (100) comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
**characterized by** indicating lower layers of the communications device to stop the MIMO operation when an ACTIVE SET UPDATE message, a CELL UPDATE CONFIRM message, or a reconfiguration message not including a MIMO parameter information element, hereinafter called IE, is received from a network terminal (302).

5. The communications device (100) of claim 4, **characterized in that** the lower layers of the communications device comprise a media access control layer and a physical layer.

6. The communications device (100) of claim 4, **characterized in that** the program code (112) further comprises clearing a MIMO_STATUS variable in a radio resource control, hereinafter called RRC, layer for storing configuration data corresponding to the MIMO operation.
